# EUROPEAN PATENT APPLICATION

(11) **EP 3 879 771 A1**
(43) Date of publication of application: **15.09.2021**
(21) Application number: 20162533.2
(22) Date of filing: 11.03.2020
(51) Int. Cl.: H04L 25/02, H04B 3/30

(54) **CAN FD INTERFACE CIRCUITS FOR BOTH TERMINATING NODES AND NON-TERMINATING NODES**

(71) Applicant: Volvo Car Corporation, 40531 Göteborg (SE)
(72) Inventor: Maliyakkal, Shefeen, 44231 Kungälv (SE)
(74) Representative: Nederlandsch Octrooibureau

(57) **Abstract**

The present invention relates to a terminating or non-terminating interface in a data communication system such as a controller area network, CAN, bus, which comprises a first inductive circuit for blocking a differential mode signal and configured to be connected in parallel with two data lines, and a second inductive circuit for blocking a common mode signal and configured to be connected in serial with the two data lines.

## Description

### Technical Field

**0001** This invention provides terminating and non-terminating interfaces for connecting terminating nodes and non-terminating nodes, respectively, in communication systems such as bus networks. More specifically, the invention provides terminating and non-terminating interfaces for controller area networks (CAN) and CAN with flexible data rate (CAN-FD). Such communication systems may be used in the internal networks of automobiles.

### Background Art

**0002** A communication system with a bus topology includes a bus and nodes connected to the bus, wherein all the communications between the nodes are via the bus. A controller area network (CAN) is a typical bus communication network, which is used commonly in internal networks of automobiles. The first generation of CAN has a low data rate, was followed by an extension of the classic CAN, CAN-FD (CAN flexible data rate, may also referred to as one of the high-speed CANs), which was developed to make it possible to choose faster or slower data rates, for example within a maximal data rate of 5 Mbit/s.

**0003** In a communication system, differential mode (DM) data signals may be used, e.g., in CAN and CAN-FD, where a pair of two twisted wires forms the bus and is used to transmit DM data signals. The pair of wires may be referred to as data lines. The data signals transmitted on the two data lines are CAN-H signals and CAN-L signals, respectively. The two data lines are the CAN-H line and CAN-L line.

**0004** The radiation immunity of a communication system circuit, such as a CAN and/or CAN-FD bus network, is an important factor for reliable data communications. The electromagnetic environment may create common mode (CM) noise on the cables/wires of the network, e.g., CM noise on the pair of the wires in the CAN/CAN-FD bus can be such that the voltages of CAN-H and CAN-L signals are influenced by adding the CM noise and the data may be interpreted wrongly at a receiver. For example with communication circuits in automobiles, the most problematic frequency range is 20-30 MHz where the automobile body has its lowest electromagnetic resonances. In such a frequency range the communication circuits, e.g., the CAN bus and nodes, should be tolerant to certain level of field strengths, e.g., an electric field strength less than or around 50-60 V/m. This is generally known as electromagnetic compatibility (EMC).

**0005** Signal quality is another factor for reliable data communications in such a network, i.e., the signal quality should be maximized.

**0006** In some specific types of networks, there are also requirements for bus impedance. For example, the impedance of the network needs to be matched to provide reliable and sound signals. **0007** Therefore, there is a need for an improved communication system, especially for a bus communication system, for example CAN and CAN-FD, with good performance in both signal quality and EMC.

### Summary

**0008** The present invention is to provide a communication system and the interfaces for it, e.g., for CAN bus, to have good EMC and signal quality. At the same time such interfaces can provide easy configuration, adaption and modification to the communication system.

**0009** Even though the current invention is mainly described in a bus network, it can be used in other types of networks too, e.g., a star topology and a mixed topology as defined in ISO 11898-3 for CAN.

**0010** According to an embodiment of the current invention, a terminating or non-terminating interface in a data communication system such as a controller area network, CAN, bus, comprises a first inductive circuit for blocking a differential mode signal and configured to be connected in parallel with two data lines, and a second inductive circuit for blocking a common mode signal and configured to be connected in serial with the two data lines.

**0011** According to an embodiment of the current invention, the above terminating or non-terminating interface may be configured to connect a transceiver to the data communication system via the second inductive circuit.

**0012** According to an embodiment of the current invention, the above terminating or non-terminating interface may further comprise a first and a second resistance elements connecting to the first inductive circuit.

**0013** According to an embodiment of the current invention, in the above terminating or non-terminating interface, the first and the second resistance elements may be for absorbing the common mode signal, preferably based on common impedance matching.

**0014** According to an embodiment of the current invention, in the above terminating or non-terminating interface if the interface is a non-terminating interface, the first inductive circuit may be for reflecting the differential signal.

**0015** According to an embodiment of the current invention, in the above terminating or non-terminating interface if the at least one interface is a terminating interface, the terminating interface may further comprise a third and a fourth resistance elements.

**0016** According to an embodiment of the current invention, in the above terminating interface the third and the fourth resistance elements may be for terminating the differential mode signal, preferably based on differential impedance matching.

**0017** According to an embodiment of the current invention, the above terminating interface may comprises a first capacitor, which may be connected to the third and fourth resistance elements and ground.

**0018** According to an embodiment of the current invention, the above terminating or non-terminating interface may comprise a second capacitor connected between the first inductive circuit and ground.

**0019** According to an embodiment of the current invention, the above terminating or non-terminating interface may comprise a third and a fourth capacitor connected between the second inductive circuit and ground.

**0020** According to an embodiment of the current invention, in the terminating or non-terminating interface the first inductive circuit may be a differential mode choke or formed by a common mode choke, and/or the second inductive circuit may be a common mode choke.

**0021** According to an embodiment of the current invention, a terminating node comprises the above terminating interface.

**0022** According to an embodiment of the current invention, a non-terminating node comprises the above non-terminating.

**0023** According to an embodiment of the current invention, a communication system such as a controller area network, CAN, or a CAN with flexible rate, CAN-FD, comprises the above terminating interface and/or the non-terminating interface.

**0024** According to an embodiment of the current invention, the above communication system may comprise the above terminating node and/or non-terminating node.

**0025** A network may comprise terminating nodes and/or non-terminating nodes. The terminating nodes are nodes at the ends of the network (e.g., a bus network) which need to terminate (e.g., consume) the DM data signal and prevent the DM data signal from being reflected back to bus (thus interfering later data signal). This requirement and configuration are called DM impedance matching. The non-terminating nodes are other nodes on the bus except for the non-terminating nodes. The non-terminating nodes should minimize the energy/power consumption by avoiding contributing DM impedance to the network such that the DM data signal strength does not reduce too much before reaching the ends of the network. Both terminating nodes and non-terminating nodes can transmit and/or receive data. Nodes may be referred to as transceivers in general. Thus the terms "nodes" and "transceivers" are used interchangeably in this document.

**0026** A network (e.g., a bus network) may include interface circuits to connect the nodes/transceivers to the network (e.g., the bus). An interface circuit for connecting the terminating node is called a terminating interface (or a terminating node interface) and an interface circuit for connecting the non-terminating node is called a non-terminating interface (or a non-terminating node interface). The interface circuits may be separate from the network and the nodes, or they may be included (i.e., integrated) in either the network (e.g., on the bus) or the nodes.

**0027** According to an embodiment of the current invention, an interface may comprise two inductive circuits, i.e., a first one blocking DM signals (i.e., data) and being connected in parallel with data lines (e.g., between two data lines) of the network, and a second one blocking CM signals (i.e., noise) and being connected in serial with data lines. Furthermore, the first inductive circuit may be for passing CM signals (i.e., noise) and the second inductive circuit may be for passing DM signals (i.e., data). The blocking and passing may be achieved based on different impedance configurations. For example, the first inductive circuit may have a high DM impedance and a low CM impedance (i.e., the DM impedance is higher than the CM impedance), and the second inductive circuit may have a low DM impedance and a high CM impedance (i.e., the DM impedance is lower than the CM impedance). For example, the first conductive circuit may be a DM choke bridging (i.e., in parallel with) the data lines or a CM choke that is connected in parallel to the data lines and functions as a DM choke. The second inductive circuit may be a CM choke connected in serial with the data lines.

**0028** According to an embodiment of the current invention, the first inductive circuit is connected in parallel with the data lines, wherein the inputs (e.g., two or more inputs) of the first inductive circuit are connected to the data lines and the outputs (e.g., two or more outputs) of the first inductive circuit are connected to each other and/or to the ground. For example, each of two inputs of the first inductive circuit (e.g., a DM choke) is connected to one of the two bus data lines, respectively, and two outputs of the first inductive circuit are connected to each other and/or then to the ground.

**0029** According to an embodiment of the current invention, the second inductive circuit is connected in serial with the data lines, where the inputs (e.g., two or more inputs) of the second inductive circuit are connected to the data lines and the outputs (e.g., two or more outputs) of the second inductive circuit are connected to a transceiver/node. For example, each of two inputs of the second inductive circuit (e.g., a CM choke) is connected to one of the two bus data lines, respectively, and two outputs of the second inductive circuit (e.g., a CM choke) are connected to the input and output of a transceiver/node.

**0030** According to an embodiment of the present invention, if an interface is a non-terminating interface, the first inductive circuit is configured with a high DM impedance that may block DM signals between the two data lines, i.e., by bridging from one data line to another data line. Thus, there is no or very limited signal energy/power consumption (note that power consumption and energy consumption are used interchangeably in this document) for the DM signals between the data lines. I.e., the DM signal can be fully or majorly reflected back to the network (e.g., a bus network). Thus, the signal strength of DM signals is strong enough (e.g., the signal voltage is higher or equal to a signal voltage threshold) when reaching the receiving nodes. Additionally, the first inductive circuit may be with a low CM impedance and pass CM noise between the data lines, such that the CM noise can be absorbed, for example, via CM impedance matching with one or more resistors connected to the first conductive circuit or with its internal CM impedance of the first inductive circuit. In this way, the CM noise will not be reflected back and forth in the network. Therefore, the signal quality of DM data signals can be guaranteed without being interfered by CM noise.

**0031** According to an embodiment of the present invention, if an interface is a non-terminating interface, the second inductive circuit blocks/filters CM noise due to its high CM impedance, therefore, the CM noise may not pass the second inductive circuit and reach a node, which guarantees EMC. The second inductive circuit may have a low DM impedance such that DM data signals can pass to a non-terminating node without or with very limited power consumption. Thus, the signal strength of the DM data signals is not reduced and the signal quality received by a non-terminating node is guaranteed.

**0032** According to an embodiment of the present invention, if an interface is a terminating interface, the first inductive circuit is with a high DM impedance that may block the DM signals between two data lines, i.e., bridging from one data line to another data line. Thus, there is no or very limited signal energy/power consumption for the DM signals between the data lines. Additionally, the first inductive circuit may be with a low CM impedance and pass CM noise between the data lines, such that the CM noise may be absorbed (e.g., via CM impedance matching with one or more resistors connected to the first conductive circuit, or via the CM impedance on the first inductive circuit). In this way, the CM noise will not be transmitted in the network (e.g., a bus) and interfere DM data signals.

**0033** According to an embodiment of the present invention, if an interface is a terminating interface, the second inductive circuit blocks/filters CM noise due to its high CM impedance, therefore, the CM noise cannot pass the second inductive circuit and reach a node, which guarantees EMC. The second inductive circuit may have a low DM impedance such that DM data signals can pass to the non-terminating node without or with very limited power consumption. Thus, the signal quality received by the non-terminating node is guaranteed.

**0034** According to an embodiment of the present invention, if an interface is a terminating interface, the interface may comprise one or more resistors connected to the output ends of the second inductive circuit such that the DM data signals can be absorbed (which may be referred to as signal terminating, data signal terminating, DM terminating, DM signal terminating and/or DM data signal terminating). For example, the resistor(s) may be connected between two data lines (e.g., in parallel) and in-between of the second inductive circuit and the terminating node. The impedance of the one or more resistors can be determined via DM impedance matching such that the DM data signals can be maximally absorbed. In this way, the DM data signals are not reflected back to the network (e.g., a bus) and interfere DM data signals. Thus, the signal quality of data signals on the entire network can be guaranteed.

**0035** Accordingly, if an interface is a terminating interface, the resistor(s) connected between the data lines and in-between of the second inductive circuit and the terminating node may be replaced by an internal DM impedance between outputs of the second inductive circuit.

**0036** Accordingly, if an interface is a non-terminating or terminating interface, the first inductive circuit (bridging from one data line to another data line) with a high DM impedance can block the DM signals between the two data lines. Thus, there is no or very limited power consumption (of the DM signals) between the data lines before reaching the second inductive circuit. Then the DM signals can pass the second inductive circuit and reach a node without any signal strength (e.g., voltage) loss or with a very limited loss.

**0037** According to an embodiment of the present invention, in the terminating and/or the non-terminating interfaces, the first inductive circuit may be a DM choke or a CM choke that is connected in a way such that it functions as a DM choke. The DM choke (or functioned DM choke) may have a high DM impedance to block DM signals. It may have a low CM impedance to pass CM signals; or it may have a predetermined CM impedance to absorb CM signals (e.g., CM noise). The predetermined CM impedance may be determined via CM impedance matching to maximally absorb CM noise. Therefore, the predetermined CM impedance may be determined based on the characteristics of the CM noise (e.g., the voltage, current, power, lasting period, and/or frequency) to be absorbed and/or the characteristics of the network (e.g., the impedance on the data lines, and/or the contributed impedance by connected (and/or intended to be connected) nodes). If resistor(s) is used to absorb CM noise, the impedance of the resistor(s) is determined based on the same factors.

**0038** According to an embodiment of the present invention, in the terminating and/or the non-terminating interface, the second inductive circuit may be a CM choke or a DM choke that is connected in a way such that it functions as a CM choke. The CM choke (or functioned CM choke) may have a high CM impedance to block CM signals and may have a low DM impedance to pass DM signals.

**0039** In a terminating interface, the second inductive circuit may have a predetermined DM impedance between output ends such that DM signals can be absorbed (i.e., terminated). The predetermined DM impedance may be determined via DM impedance matching for the maximal absorbing of DM signals. Therefore, the predetermined DM impedance may be determined based on the characteristics of the DM signals (e.g., the voltage, current, power, lasting period, and/or frequency) to be absorbed and/or the characteristics of the network (e.g., the DM impedance on data lines of a bus, and/or the contributed DM impedance by connected (and/or intended to be connected) nodes). If resistor(s) is used to absorb/terminate DM signals, the impedance of the resistor(s) is determined based on the same factors.

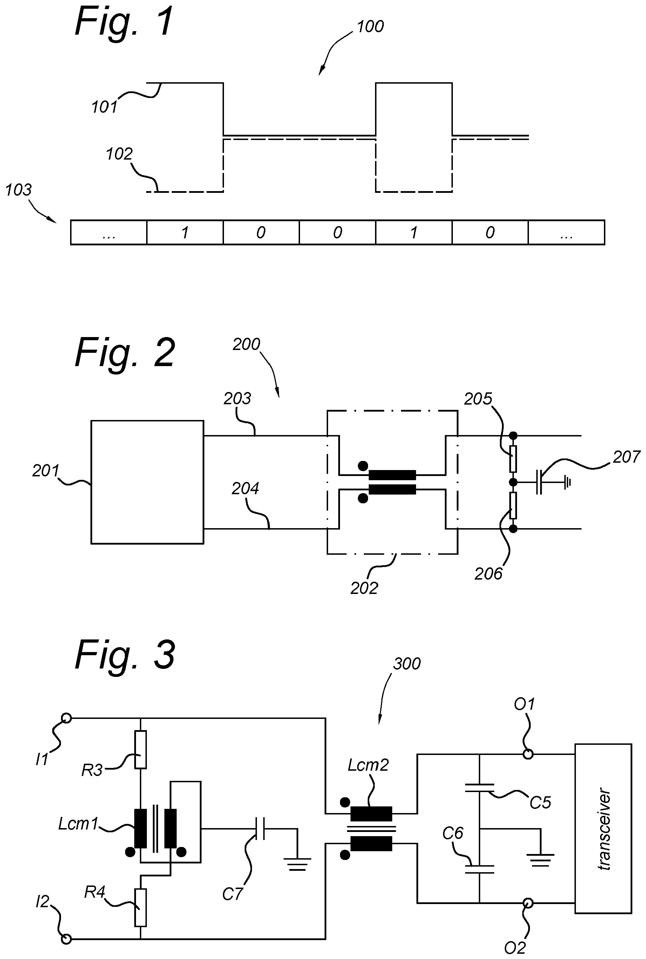

**0040** According to the above embodiments of the invention, the present invention have the below advantages:
**0041** First of all, CM noise caused by the electromagnetic environment can be blocked by the second inductive circuit such that the CM noise cannot reach a connected terminating or non-terminating node. Furthermore, the CM noise can pass through the first inductive circuit and be absorbed by the predetermined CM impedance (e.g., via extra resistor(s) connected to the first inductive circuit and/or the internal CM impedance of the first inductive circuit). In this way, the interference caused by the CM noise to the DM data signals on the network and nodes may be minimized, i.e., providing good EMC performance.
**0042** Secondly, for the non-terminating interfaces/nodes, there is no or limited energy/power consumption of DM data signals between data lines via the first inductive circuit because of its high DM impedance (i.e., DM signals are blocked and reflected). Therefore, the data signals (being DM signals) can travel along the network with no or limited signal strength reduction such that both the terminating nodes and non-terminating nodes can received data signals with reasonable signal strength. This is especially beneficial for the nodes which are at the ends or close to the ends of a bus network since the data signals need to travel a long distance from the transmitting node to the receiving nodes.
**0043** Thirdly, for the terminating interfaces/nodes, the DM signals are absorbed (i.e., terminated) by the resistors connected (and/or the internal DM impedance) between outputs of the second inductive circuit such that no DM signal is reflected back to the network to cause interference to new data signals. Thus, the signal quality can be improved.
**0044** Fourthly, CM and DM impedance matching of the network may be performed separately and independently. The CM impedance matching of the network is to absorb the CM noise from the electromagnetic environment. The CM impedance matching is for the resistor(s) connected to the first inductive circuit (and/or the internal CM impedance of the first inductive circuit) because the second inductive circuit blocks the CM noise from reaching the nodes. Therefore, the CM impedance (for absorbing the CM noise) may be determined without considering the second inductive circuit and the connected node. The DM impedance matching for the DM impedance between the outputs of the second inductive circuit on terminating interfaces/nodes, either contributed by extra resistor(s) and/or the internal DM impedance between the outputs of the second inductive circuit in the terminating interface. Therefore, the (predetermined) DM impedance (for DM terminating on the terminating interfaces/nodes) may be determined without considering the CM impedance on or connected to the first inductive circuit. Therefore, it is more flexible to design a network and can easily achieve the maximal performance in EMC (i.e., absorbing CM noise) and signal quality (i.e., DM data signal terminating at the terminating interface/nodes).
**0045** Fifthly, adding/removing non-terminating nodes (via the non-terminating interfaces) to/from the network (e.g., on/off the bus) is very easy according to the present invention. For example in some networks, each added new non-terminating node contributes to the DM impedance of the networks, for example via resistors 205 and 206 in Fig. 2 (which will be discussed for Fig. 2). Thus, it is difficult to proceed the DM impedance matching when the number of non-terminating nodes changes all the time because the changed number of nodes changes the total DM impedance of the network. Therefore, in order to achieve good DM signal terminating (e.g., absorbing) performance, the terminating load (e.g., the DM impedance at the ends of a bus) in such networks needs to be changed when adding or removing non-terminating nodes. However, in the present invention, non-terminating nodes can be added or removed via the non-terminating interfaces since non-terminating interfaces do not contribute to DM impedance of the network. Thus, the DM signal terminating (and DM impedance matching) at the terminating nodes (and/or interfaces) does not need to consider the number of the non-terminating nodes/interfaces on a network. In the present invention, the DM impedance (of the terminating interfaces) between the outputs of the second inductive circuit contributes to the total DM impedance of the network. Thus, determining/adjusting/matching the DM impedance of the network can be done only via the DM impedance between the outputs of each second inductive circuit on the terminating interfaces. Thus, the network configuration/design is very flexible in terms of the number of total nodes according the present invention.
**0046** Sixthly, separated non-terminating and terminating interfaces provide a flexible and adaptable network configuration. For example, the transceivers/nodes can be added to and/or removed from a network (e.g., a bus network) dynamically and easily. Therefore, the network is very easy to use, especially if these interfaces are standardized.

### Brief Description of Drawings

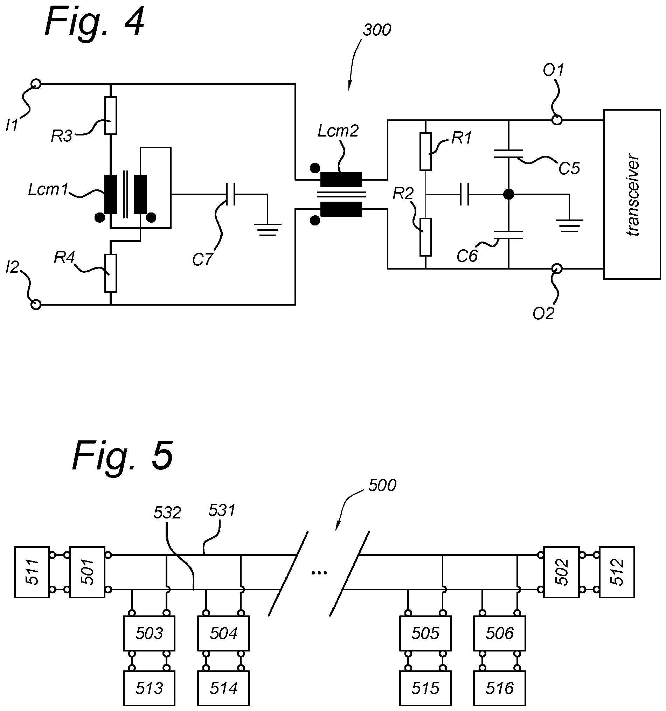

**0047** A number of embodiments according to the present invention, by way of non-limiting examples, will be discussed in more detail below, with reference to the attached drawings, in which:
**0048** Fig. 1 depicts CAN-H and CAN-L signals in a CAN.
**0049** Fig. 2 depicts a noise filtering circuit from the state of the art.
**0050** Fig. 3 depicts an embodiment of a non-terminating interface according to the present invention.
**0051** Fig. 4 depicts an embodiment of a terminating interface according to the present invention.
**0052** Fig. 5 depicts an example of a network according to the present invention.

### Description of Embodiments

**0053** Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

**0054** Fig. 1 shows data signals in a CAN-FD where line 101 depicts CAN-H signals and line 102 depicts CAN-L signals transmitted on the CAN-H wire and CAN-L wire (i.e., the CAN-H line and CAN-L line), respectively. The voltages of the CAN-H and CAN-L signals together represent the data (1 or 0). CAN-H 101 and CAN-L 102 represent data 0 with a voltage of 0 V or with an offset from 0 V (e.g., 2.5V). Data sequence 103 is the sent data sequence represented by the CAN-L and CAN-H signals in the example. The CAN-H signals and CAN-L signals are DM signals according to the voltages on the CAN-H and CAN-L lines. Even though the CAN-L and CAN-H signals in Fig. 1 are with the same voltage when data 0 is transmitted, they may be different in other networks, e.g., in the low speed CAN as defined in ISO 11898-3.

**0055** Fig. 2 shows a basic noise filtering circuit 200, e.g., for a CAN bus, where a transceiver 201 is connected to the bus (not shown) with line 203 transmitting CAN-H signals and line 204 transmitting CAN-L signals via a CM choke 202. The CM noise from the bus cannot pass CM choke 202 (i.e., CM choke 202 blocks the CM noise) and is absorbed by resistors 205 and 206.

**0056** However, in the filtering circuit of Fig. 2, the resistors 205 and 206 both contribute to the CM impedance and DM impedance of the bus, which makes it difficult to adjust the values (i.e., match the impedance) of the resistors 205 and 206 to achieve both good performance in absorbing the CM noise and absorbing (i.e., terminating) the DM data signals (may be referred to as DM signal or data signal) at the ends of the bus network. At the same time, a part of the DM data signals are consumed by resistors 205 and 206 when travelling on a bus network, thus, the DM signal strength is reduced before reaching a receiving node. The signal strength may be represented by the voltage of a signal, the current of a signal and/or the power of a signal. In this document the voltage of a signal (e.g., a DM data signal) is used as an example to represent the signal strength, but it should be understood that the current and/or the power can be used in the present invention too.

**0057** Fig. 3 shows an example of a non-terminating interface (connected to a transceiver) according to an embodiment of the present invention. The non-terminating interface is for using in a communication network, and the network may be a bus network such as a CAN and CAN-FD or any other types of networks.

**0058** In Fig. 3, The non-terminating interface comprises:
at least two input ends I1 and I2 for connecting the interface to the network, e.g., via two data lines of a bus network,
a DM choke Lcm1 comprising two input ends and two output ends,
a CM choke Lcm2 comprising two input ends and two output ends,
a first resistor R3,
a second resistor R4,
wherein:
   each of the two input ends of the CM choke Lcm1 is connected to one end of the first and second resistors (R3, R4), respectively,
   the other ends of the first and second resistors (R3, R4) are connected to the input ends I1 and 12, respectively,
   the two output ends of the DM choke Lcm1 are connected to the ground,
   the two input ends of the CM choke Lcm2 are connected to the input ends I1 and 12, respectively, and
   the outputs ends of the CM choke Lcm2 are connected to a non-terminating node, e.g., via the interface outputs ends O1 and O2, respectively.
Furthermore, the two output ends of the DM choke Lcm1 may be connected to the ground via a capacitor C7, and/or two capacitors C5 and C6 may be connected to the two output ends O1 and O2, respectively. The two capacitors C5 and C6 may be further connected to the ground.

**0059** In the non-terminating interface of Fig. 3, capacitor C7 may be used for direct current isolation, is optional for the interface and can be omitted. Capacitors C5 and C6 are for further absorbing of CM signals that pass CM choke Lcm2 (if the CM noise is not entirely blocked by CM choke Lcm2), which can be optional. One, two or none of capacitors C5 and C6 may be used in the non-terminating interface of Fig. 3.

**0060** In the non-terminating interface of Fig. 3, resistors R3 and R4 are optional and serve the purpose of absorbing CM signals. For example one, both or more resistors may be used. Or, the DM choke Lcm1 may have an internal CM impedance such that the CM noise can be absorbed by the internal CM impedance. Or, resistor(s) R3/R4 and the internal CM impedance of Lcm1 are used together for absorbing the CM noise.

**0061** In the non-terminating interface of Fig. 3, when CM noise inputs from the interface input ends I1 and I2, it is blocked by CM choke Lcm2 and cannot reach the transceiver. The CM noise can pass the DM choke Lcm1 and be absorbed by resistors R3/R4 and/or the internal CM impedance of DM choke Lcm1. In this way, the CM noise is absorbed and will not interfere the DM data signals received by the transceiver.

**0062** In the non-terminating interface of Fig. 3, when a DM data signal inputs from the interface inputs I1 and I2, it is blocked by the DM choke Lcm1 that there is no energy/power consumption of the data signal on resistors R3 and R4. However, the DM data signal can pass the CM choke Lcm2 and reach the transceiver without energy/power consumption. Furthermore, the CM choke Lcm2 may have a very low or near to zero or zero DM impedance which will not cause energy/power consumption of the DM data signals. Therefore, the DM data signals can be reflected to the network without or with very limited reduction in signal strength. Reversely, when the transceiver transmits DM data signals to the network via output ends O1 and O2, the DM signals can reach the network via input ends O1 and O2 without or with limited reduction of signal strength. Thus, the signal quality can be guaranteed with such a non-terminating interface as in Fig. 3.

**0063** A non-terminating node/transceiver can be connected to a network via a non-terminating interface in Fig. 3.

**0064** Fig. 4 shows an example of a terminating interface (connected to a transceiver) according to an embodiment of the present invention. The terminating interface is for using in a communication network, and the network may be a bus network such as a CAN and CAN-FD or any other types of networks.

**0065** The terminating interface in Fig. 4 has a similar configuration as in Fig. 3 except for resistors R1, R2 and capacitor C4. In Fig. 4, the output ends of CM choke Lcm2 are connected to two resistors R1 and R2 and the resistors are further connected to the ground via a capacitor C4. Capacitor C4 may be for direct current isolation and is optional. Resistors R1 and R2 are optional where none, one, two or even more resistors may be used. There might be an internal DM impedance between the output ends of DM choke Lcm2. The resistor(s) R1/R2 and/orthe internal impedance of DM choke Lcm2 are for terminating (i.e., absorbing) DM data signals.

**0066** In the terminating interface of Fig. 4, CM noise is absorbed in the similar way as in Fig. 3. **0067** In the terminating interface of Fig. 4, a DM data signal passes CM choke Lcm2 and reaches the transceiver in a similar way as in Fig. 3. However, the DM data signal is further absorbed/terminated by resistor(s) R1/R2 and/or the internal DM impedance (between the output ends) of DM choke Lcm2. Therefore, no DM data signals are reflected back to the network and cause no interference to the later data signals.

**0068** Please note that in the above Figs. 3 and 4, the same reference signs (e.g., R1, R2, R3, R4, Lcm1, Lcm2, C4, C5, C6, C7, 11, 12, O1 and O2) are used but they may have the same or different values in the terminating and non-terminating interfaces. For example, resistor R1 in Fig. 3 may have the same or different impedance as the resistor R1 in Fig. 4.

**0069** Furthermore, at least one of the interfaces in Figs. 3 and 4 may be used in a network.

**0070** The above examples in Figs. 3 and 4 are advantageous because:
**0071** Firstly, CM noise can be absorbed by resistor(s) R3/R4 and/or the internal CM impedance of DM choke Lcm1, and blocked by CM choke Lcm2 from reaching the transceiver. Thus, good EMC can be achieved.
**0072** Secondly, in the non-terminating interface of Fig. 3, there is no or very limited energy/power consumption of the DM data signals when they reach a transceiver and they can be maximally reflected back to the network. Thus, good data signal strength can be achieved at the ends of the network.
**0073** Thirdly, in the terminating interface of Fig. 4, DM data signals are terminated by the resistor(s) R1/R2 and/or the internal impedance of DM choke Lcm2 without reflecting back to the network to interfere the new data signals. Thus, good data signal quality can be achieved in the network.
0074 Fourthly, when a network uses the interfaces in Figs. 3 and 4, the CM impedance of the network is determined by resistors R1/R2 and/or the internal CM impedance of DM choke Lcm1, and the DM impedance of the network is determined by resistors R3/R4 and/or the DM impedance between the output ends of CM choke Lcm2. Therefore, during the CM impedance matching and the DM impedance matching, the DM impedance and the CM impedance can be determined separately and independently. Thus, easy impedance matchings can be achieved.
0075 Fifthly, the non-terminating interface in Fig. 3 does not contribute to the DM impedance of the network, thus, adding or removing a non-terminating interface/node do not change the DM impedance of the network and do not influence the DM signal terminating/matching (which is to avoid DM signal being reflected back from the terminating nodes/interfaces and interfering the later data signals). Thus, a flexible network can be achieved.
0076 Sixthly, the interfaces in Figs. 3 and 4 provide an easy and simple (maybe even standardized) way to clip on and off of nodes/transceivers.

0077 Fig. 5 shows an example of a bus network 500 wherein terminating interfaces 501 and 502 connect terminating nodes 511 and 512 to the network, respectively, via data lines 531 and 532, and non-terminating interfaces 503 to 506 connect non-terminating nodes 513 to 516 to the network, respectively, via data lines 531 and 532.

0078 There are four non-terminating nodes 513 to 516 and four non-terminating interfaces 503 to 506 shown in Fig. 5. However, the numbers of the non-terminating nodes and the non-terminating interfaces may be the same or different. For example, if a non-terminating interface is not connected to a non-terminating node, the two output ends of the non-terminating interface may be open (not connected to each other and not connected to other component) or connected to each other. There may be more or less non-terminating nodes than non-terminating interface in a network.

0079 There are two terminating nodes 511 and 512 and two terminating interfaces 501 and 502 shown in Fig. 5. However, the numbers of the terminating nodes and the terminating interfaces may be the same or different. For example, if a terminating interface is not connected to a terminating node, the two output ends of the non-terminating interface may be open (i.e., not connected to each other and not connected to other component) or connected to each other. There may be more or less terminating nodes than terminating interfaces in a network.

0080 One, some, all or even more non-terminating interfaces 503 to 506 in Fig. 5 may be according to the present invention, for example as shown in Fig. 3 without, with a part or with all the optional components, e.g., capacitors C5, C6 and C7.

0081 One, both or more terminating interfaces 501 and 502 in Fig. 5 may be according to the present invention, for example as shown in Fig. 4 without, with a part or with all the optional components, e.g., capacitors C4, C5, C6 and C7.

0082 A network as in Fig. 5 may comprise at least one of both types of the non-terminating and terminating interfaces according to the present invention.

0083 When a network as in Fig. 5 is a 500kps CAN-FD with 10 nodes, the non-terminating interface may have the following configuration: R3=R4=910 ohms; C5=C6=15pF; C7=4.7nF; Lcm2=100µF; Lcm1 with a CM impedance of at least 1900 ohms. The terminating interfaces may have the following configuration: R1=R2=60 ohms; R3=R4=910 ohms; C5=C6=15pF; C7=4.7nF; Lcm2=100µF; Lcm1 with a CM impedance of at least 1900 ohms.

## Claims

1. A terminating or non-terminating interface in a data communication system such as a controller area network, CAN, bus, comprising a first inductive circuit (LCM1) for blocking a differential mode signal and configured to be connected in parallel with two data lines, and a second inductive circuit (LCM2) for blocking a common mode signal and configured to be connected in serial with the two data lines.

2. The terminating or non-terminating interface according to claim 1, is configured to connect a transceiver to the data communication system via the second inductive circuit (LCM2).

3. The terminating or non-terminating interface according to any preceding claims, further comprising a first and a second resistance elements (R3; R4) connecting to the first inductive circuit (LCM1).

4. The terminating or non-terminating interface according to any preceding claims, wherein the first and the second resistance elements (R3; R4) are for absorbing the common mode signal, preferably based on common impedance matching.

5. The terminating or non-terminating interface according to any preceding claims, wherein if the interface is a non-terminating interface, the first inductive circuit (LCM1) is for reflecting the differential signal.

6. The terminating or non-terminating interface according to any preceding claims, wherein if the at least one interface is a terminating interface, the terminating interface further comprises a third and a fourth resistance elements (R1; R2).

7. The terminating interface according to any preceding claims, wherein the third and the fourth resistance elements (R1; R2) are for terminating the differential mode signal, preferably based on differential impedance matching.

8. The terminating interface according to claim 7, further comprising a first capacitor (C4), which is connected to the third and fourth resistance elements (R1; R2) and ground.

9. The terminating or non-terminating interface according to any preceding claims, further comprising a second capacitor (C7) connected between the first inductive circuit (LCM1) and ground.

10. The terminating or non-terminating interface according to any preceding claims, further comprising a third and a fourth capacitor (C5; C6) connected between the second inductive circuit (LCM2) and ground.

11. The terminating or non-terminating interface according to any preceding claims, wherein the first inductive circuit (LCM1) is a differential mode choke or formed by a common mode choke, and/or the second inductive circuit (LCM2) is a common mode choke.

12. A terminating node comprising the terminating interface according to any of the proceeding claims.

13. A non-terminating node comprising the non-terminating interface according to claims 1 to 11.

14. A communication system such as a controller area network, CAN, or a CAN with flexible rate, CAN-FD, comprising the terminating interface and/or the non-terminating interface according to claims 1 to 11.

15. The communication system according to claims, further comprising the terminating node and/or non-terminating node according to claims 12 and 13.
